# EUROPÄISCHE PATENTSCHRIFT

(11) **EP 2 010 789 B1**
(45) Veröffentlichungstag und Bekanntmachung des Hinweises auf die Patenterteilung: **03.03.2010**
(21) Anmeldenummer: 07711843.8
(22) Anmeldetag: 08.03.2007
(51) Int. Cl.: F15B 15/08

(54) **FLUIDBETÄTIGTE LINEARANTRIEBSVORRICHTUNG**
FLUID ACTIVATED LINEAR DRIVE APPARATUS
DISPOSITIF D'ENTRAINEMENT LINEAIRE HYDRAULIQUE

(30) Priorität: 21.04.2006 DE 202006006447 U
(43) Veröffentlichungstag der Anmeldung: 07.01.2009
(73) Patentinhaber: FESTO AG & Co. KG, 73734 Esslingen (DE)
(72) Erfinder: WAGNER, Thomas, 71364 Winnenden (DE); WEBERRUSS, Rolf, 71394 Kernen (DE)
(74) Vertreter: Abel, Martin
(86) Internationale Anmeldenummer: PCT/EP2007/001981
(87) Internationale Veröffentlichungsnummer: WO 2007/121808

(56) Entgegenhaltungen:
- EP-A1- 0 135 041
- EP-B1- 0 603 471
- DE-A1- 3 436 977
- DE-A1- 19 710 790
- DE-B4- 10 143 878
- DE-C1- 3 124 878
- US-B1- 6 336 393

## Beschreibung

Die Erfindung betrifft eine fluidbetätigte Linearantriebsvorrichtung, mit einem Gehäuserohr, in dem ein Antriebskolben linear verschiebbar aufgenommen ist, der mit einem am Außenumfang des Gehäuserohrs in dessen Längsrichtung verschiebbar gelagerten Abtriebsschlitten bewegungsgekoppelt ist, wobei am Außenumfang des Gehäuserohrs zur Lagerung des Abtriebsschlittens zwei jeweils zwei sich längs des Gehäuserohrs erstrekkende und sich in Achsrichtung einer ersten Querachse des Gehäuserohrs gegenüberliegende Führungsflächen aufweisende Führungsflächenpaare angeordnet sind, die in Achsrichtung einer zu der ersten Querachse rechtwinkeligen zweiten Querachse des Gehäuserohrs zueinander beabstandet sind.

Bei einer aus der EP 0 603 471 B1 bekannten Linearantriebsvorrichtung dieser Art ist der Antriebskolben mittels einer permanentmagnetischen Kopplungseinrichtung berührungslos mit dem Abtriebsschlitten antriebsmäßig verbunden. Das Gehäuserohr hat einen länglichen Querschnitt, wobei die von der Kopplungseinrichtung erzeugten Magnetkräfte überwiegend rechtwinkelig zur Längsachse des Gehäuserohrquerschnittes wirksam sind. Die Übergangsbereiche zwischen den Schmalseiten und den Breitseiten des Gehäuserohrs sind als Führungsflächen ausgebildet, an denen das Abtriebsteil gleitverschieblich anliegt.

Im Falle einer ungleichmäßigen Verteilung der magnetischen Kopplungskräfte kann im Kontaktbereich zwischen Abtriebsteil und Gehäuserohr ein unerwünschter verschleiß auftreten. Um dies weitestgehend zu vermeiden, bedarf es einer sehr präzisen Fertigung und Montage der einzelnen Komponenten, mit engen Toleranzen. Dies hat relativ hohe Herstellungskosten zur Folge.

Aus der DE 34 36 977 C2 ist ein Linearantrieb bekannt, dessen Gehäuserohr am Außenumfang mit axial verlaufenden, geneigten Führungsleisten versehen ist, an denen ein Schlitten über drehbar gelagerte Rollen abgestützt ist.

Die DE 101 43 878 B4 offenbart ein Linearstellglied mit einem verschiebbar gelagerten Gleiter, der durch Magnetkraft mit einem durch ein Fluid antreibbaren Kolben gekoppelt ist.

Es ist die Aufgabe der vorliegenden Erfindung, in Verbindung mit einer Linearantriebsvorrichtung der eingangs genannten Art Maßnahmen vorzuschlagen, die mit reduziertem Aufwand einen verschleißarmen Betrieb ermöglichen.

Zur Lösung dieser Aufgabe ist vorgesehen, dass die Führungsflächen, im Querschnitt des Gehäuserohrs gesehen, jeweils bezüglich der ersten und der zweiten Querachse geneigt sind, dass an den Führungsflächen des einen, ersten Führungsflächenpaares am Abtriebsschlitten angeordnete erste Lagerelemente anliegen, die bezüglich einer in Längsrichtung des Gehäuserohres verlaufenden Schwenkachse unabhängig voneinander relativ zum Abtriebsschlitten verschwenkbar sind, und dass an den Führungsflächen des anderen, zweiten Führungsflächenpaares am Abtriebsschlitten angeordnete zweite Lagerelemente anliegen, deren in Achsrichtung der ersten Querachse relativ zum Abtriebsschlitten eingenommene Querposition variabel vorgebbar ist.

Auf diese Weise lässt sich die bezüglich der Längsachse des Gehäuserohres eingenommene Winkellage zwischen Gehäuserohr und Abtriebsteil variabel justieren. Ein Verstellen der zweiten Lagerelemente bewirkt eine Veränderung der Drehwinkellage des Abtriebsschlittens bezüglich des Gehäuserohres, wobei die ersten Lagerelemente bedingt durch ihre am Abtriebsschlitten schwenkbare Lagerung in der Lage sind, die Drehwinkeländerung selbsttätig mitzumachen. Folglich ist ungeachtet der getroffenen Einstellung ein zuverlässiger und verspannungsarmer Kontakt zwischen den Lagerelementen und den Führungsflächen gewährleistet. Somit kann die Reibung auf ein Minimum reduziert werden, was eine hohe Lebensdauer begünstigt.

Ein Drückmittelzylinder mit Abtriebsschlitten und einstellbarer Gleitlagerung geht zwar aus der DE 31 24 878 C1 bereits hervor. Die Führungsflächen des Gehäuserohres bestehen dort jedoch aus keilförmigen Führungsnuten und die Justierung findet ausschließlich durch lineares Verlagern der in die Führungsnuten eingreifenden Lagerelemente statt.

Vorteilhafte Weiterbildungen der Erfindung gehen aus den Unteransprüchen hervor.

Eine besonders gleichförmige Belastung der in Führungskontakt miteinander stehenden Komponenten ist gewährleistet, wenn die diversen Führungsflächen untereinander mit gleichen Neigungswinkeln bezüglich den beiden Querachsen ausgerichtet sind. Bevorzugt wird ein Neigungswinkel von jeweils 45°. Hiervon abweichende Winkel sind jedoch ebenfalls möglich.

Eine besonders einfache Herstellung der Führungsflächen ist gewährleistet, wenn diese als ebene Flächen ausgeführt sind.

Prinzipiell kann der Abtriebsschlitten derart gestaltet sein, dass er das Gehäuserohr nur teilweise umschließt. Besonders vorteilhaft erweist sich die erfindungsgemäße Ausgestaltung allerdings in Verbindung mit einem beispielsweise hülsenartigen Abtriebsschlitten, der das Gehäuserohr vollständig umschließt. Aus der in diesem Fall im Querschnitt ring- oder rahmenförmigen Struktur des Abtriebsschlittens resultiert eine besonders hohe Steifigkeit und mithin eine zuverlässig Abstützung der Lagerelemente ohne Gefahr eines Nachgebens.

Der Antriebskolben könnte prinzipiell mechanisch mit dem Abtriebsschlitten gekoppelt sein, beispielsweise über eine einen Längsschlitz des Gehäuserohres durchsetzenden Mitnehmer, wie dies in der bereits erwähnten DE 31 24 878 C1 exemplarisch illustriert ist. Bei solchen rein mechanischen Kopplungen ist die Notwendigkeit zu besonders feinfühligen winkelmäßigen Justierungen jedoch nicht so ausgeprägt wie bei Bauformen, bei denen zwischen dem Antriebskolben und dem Abtriebsschlitten eine berührungslose, auf Magnetkraft basierende Bewegungskopplung vorliegt. Insofern erweist sich eine dahingehende Weiterbildung der Erfindung als besonders vorteilhaft, dass der Antriebskolben und der Abtriebsschlitten durch eine permanentmagnetische Kopplungseinrichtung berührungslos miteinander bewegungsgekoppelt sind.

Bei einer mit einer permanentmagnetischen Kopplungseinrichtung ausgestatteten Linearantriebsvorrichtung kann aufgrund toleranzbedingter unterschiedlicher Größe und/oder Magnetisierung der permanentmagnetischen Komponenten eine unterschiedliche Magnetkraftverteilung entlang des Umfanges des Gehäuserohres auftreten. Besonders ausgeprägt ist diese Problematik bei Bauformen, bei denen die permanentmagnetische Kopplungseinrichtung so ausgebildet ist, dass die von ihr erzeugten magnetischen Kopplungskräfte im wesentlichen in einer einzigen Querrichtung des Gehäuserohres wirksam sind. Hier können durch unterschiedlich hohe Magnetkräfte entsprechend unterschiedlich starke Anpresskräfte auftreten, die bei einigen Führungsflächen einen erhöhten Verschleiß zur Folge haben könnten. Durch die erfindungsgemäße Einstellbarkeit besteht jedoch die Möglichkeit, die Abstände zwischen der am Abtriebsschlitten angeordneten äußeren Magneteinrichtung und der am Antriebskolben angeordneten inneren Magneteinrichtung zu variieren, so dass durch Veränderung der Größe des Luftspaltes Einfluss auf die Stärke des lokal wirksamen Magnetfeldes genommen werden kann. Somit lässt sich die Gesamtanordnung optimal in einer Weise austarieren, dass eine gleichmäßige Belastung und mithin kein lokal übermäßiger Verschleiß auftritt.

Bei einer besonders vorteilhaften Ausführungsform weist das Gehäuserohr, zweckmäßigerweise einschließlich seines Rohrinnenraumes, einen länglichen Querschnitt auf. Ist eine solche Linearantriebsvorrichtung mit einer permanentmagnetischen Kopplungseinrichtung ausgestattet, befindet sich die äußere Magneteinrichtung zweckmäßigerweise im Bereich der Breitseiten des Gehäuserohres. Im Bereich der Schmalseiten ist keine Magneteinrichtung erforderlich.

Die beiden Führungsflächenpaare sind bei einem derart gestalteten Gehäuserohr zweckmäßigerweise so angeordnet, dass im Bereich jeder der beiden Schmalseiten des Gehäuserohres eines der beiden Führungsflächenpaare platziert ist. Die aktiv justierbaren zweiten Lagerelemente können hierbei im Bereich einer der Schmalseiten in der Achsrichtung der Querschnitt-Querachse des Gehäuserohres auf die zugeordneten Führungsflächen einwirken. Die verschwenkbaren ersten Lagerelemente befinden sich an der entgegengesetzten anderen Schmalseite.

Einige oder sämtliche Lagerelemente können als Wälzelemente ausgeführt sein. Bevorzugt wird jedoch eine Ausgestaltung als Gleitelemente, beispielsweise aus einem verschleißfesten Kunststoffmaterial.

Eine besonders geringe Flächenpressung und mithin eine äußerst leichtgängige Verfahrbarkeit des Abtriebsschlittens erhält man, wenn die Lagerelemente leistenförmig ausgebildet sind und über eine relativ große Länge mit den zugeordneten Führungsflächen in Kontakt stehen.

Die verschwenkbare Lagerung der ersten Lagerelemente wird insbesondere mittels geeigneter Kreisbogenführungseinrichtungen realisiert. Dies ermöglicht einen Verzicht auf konventionelle Lagerachsen. Am Abtriebsschlitten und an den ersten Lagerelementen können hierbei zueinander komplementäre, kreisbogenförmig gewölbte Schwenklagerflächen vorhanden sein, die gleitbeweglich aneinander anliegen. Bevorzugt wird hierbei eine am Abtriebsschlitten angeordnete konvexe Schwenklagerfläche, die mit einer konkaven Schwenklagerfläche des zugeordneten Lagerelementes kooperiert. Die Anordnung kann aber auch umgekehrt erfolgen.

Die winkelmäßige Justierung des Abtriebsschlittens wird dadurch begünstigt, dass die zweiten Lagerelemente unabhängig voneinander justiert werden können.

Bei einer bevorzugten Bauform sind die zweiten Lagerelemente in der Achsrichtung der ersten Querachse gleitverschieblich am Abtriebsschlitten gelagert und werden durch sich am Abtriebsschlitten abstützende Beaufschlagungsmittel gegen die zugeordneten Führungsflächen vorgespannt. Indem die Beaufschlagungsmittel einstellbar am Abtriebsschlitten angeordnet sind, lässt sich die Einstellung sehr leicht variieren. Bei den Beaufschlagungsmitteln handelt es sich insbesondere um Schrauben, vorzugsweise um komplett in den Antriebsschlitten versenkte Madenschrauben.

Nachfolgend wird die Erfindung anhand der beiliegenden Zeichnung näher erläutert. In dieser zeigen:

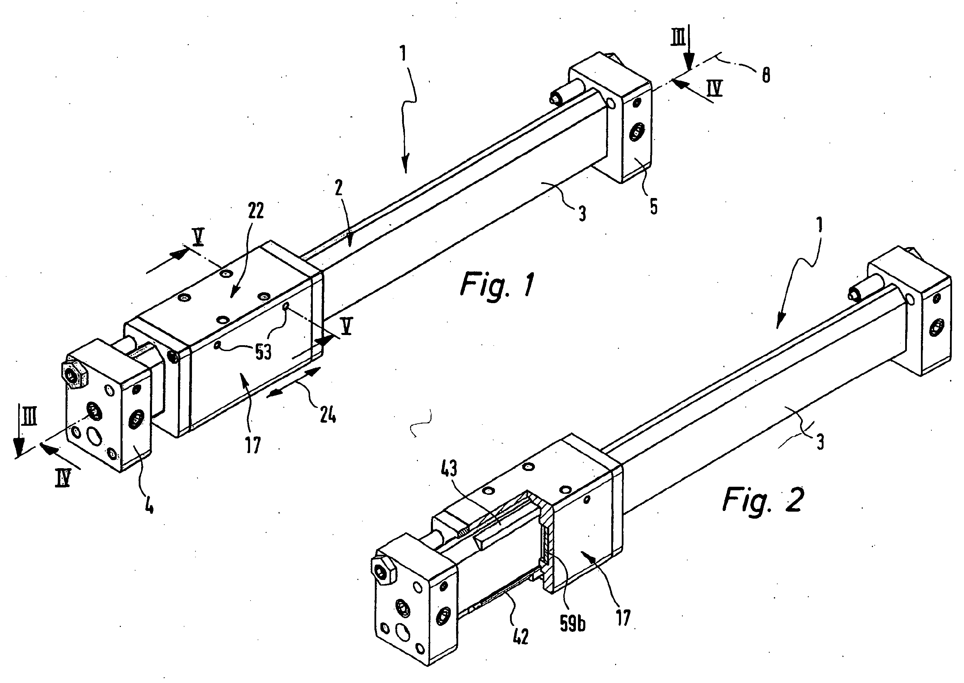

- Figur 1: eine bevorzugte Bauform der erfindungsgemäßen fluidbetätigten Linearantriebsvorrichtung in einer perspektivischen Darstellung,
- Figur 2: die Anordnung aus Figur 1 mit teilweise aufgebrochenem Abtriebsschlitten, so dass je ein leistenförmiges erstes und zweites Lagerelement sichtbar sind,

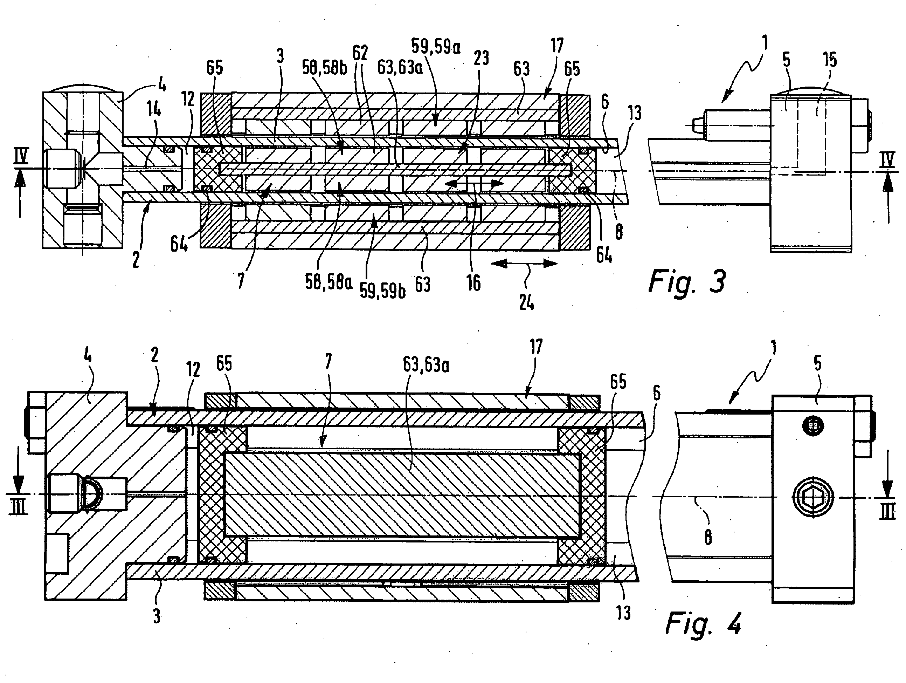

- Figur 3: einen Längsschnitt durch die Linearantriebsvorrichtung gemäß Schnittlinie III-III aus Figuren 1 und 4,
- Figur 4: die Linearantriebsvorrichtung in einer Längsschnittdarstellung mit bezüglich der Figur 3 um 90° verdrehter Schnittebene gemäß Schnittlinie IV-IV aus Figuren 1 und 3,
- Figur 5: einen Querschnitt durch die Linearantriebsvorrichtung gemäß Schnittlinie V-V aus Figur 1,
- Figur 6: den Querschnitt aus Figur 5 bei veränderter winkelmäßiger Ausrichtung zwischen Abtriebsschlitten und Gehäuserohr,

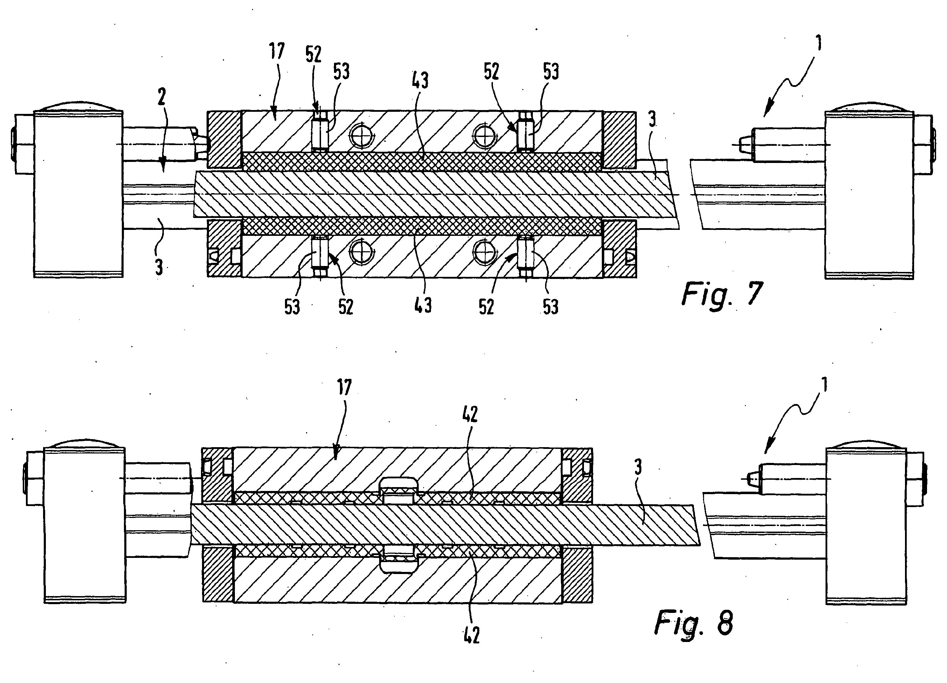

- Figur 7: einen Längsschnitt durch die Linearantriebsvorrichtung gemäß Schnittlinie VII-VII aus Figur 5 im Bereich der zweiten Lagerelemente, und
- Figur 8: einen Längsschnitt durch die Linearantriebsvorrichtung gemäß Schnittlinie VIII-VIII aus Figur 5 im Bereich der ersten Lagerelemente.

Die in ihrer Gesamtheit mit Bezugsziffer 1 bezeichnete Linearantriebsvorrichtung ist zur Betätigung mit Fluidkraft ausgelegt, wobei ein Betrieb mit sowohl flüssigen als auch gasförmigen Betätigungsfluiden möglich ist. Vorzugsweise wird Druckluft als Betätigungsfluid verwendet.

Die Linearantriebsvorrichtung 1 verfügt über ein Gehäuse 2 mit einem lineare Erstreckung aufweisenden, als Gehäuserohr 3 bezeichneten rohrförmigen Gehäuseteil. An seinen beiden Stirnseiten ist das Gehäuserohr 3 durch Abschlussdeckel 4, 5 unter Abdichtung verschlossen.

In seinem Innern definiert das Gehäuserohr 3 einen sich zwischen den beiden Abschlussdeckeln 4, 5 erstreckenden Rohrinnenraum 6. In ihm ist ein Antriebskolben 7 linear, in Achsrichtung der Längsachse 8 des Gehäuserohres 3, verschiebbar aufgenommen.

Der Antriebskolben 7 unterteilt den Rohrinnenraum 6 unter Abdichtung in zwei axial aufeinanderfolgende Arbeitskammern 12, 13. Jede Arbeitskammer 12, 13 kommuniziert mit einem eigenen Steuerkanal 14, 15, über den eine gesteuerte Fluidbeaufschlagung möglich ist, um den Antriebskolben 7 zu einer durch einen Doppelpfeil angedeuteten Antriebsbewegung 16 in Richtung der Längsachse 8 zu veranlassen. Bevorzugt verlaufen die Steuerkanäle 14, 15 in den beiden Abschlussdeckeln 4, 5.

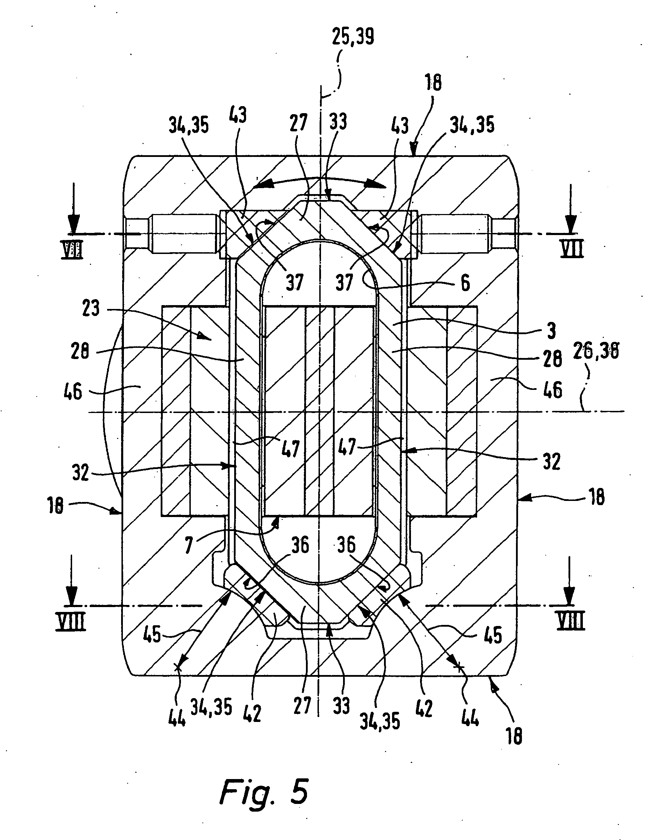

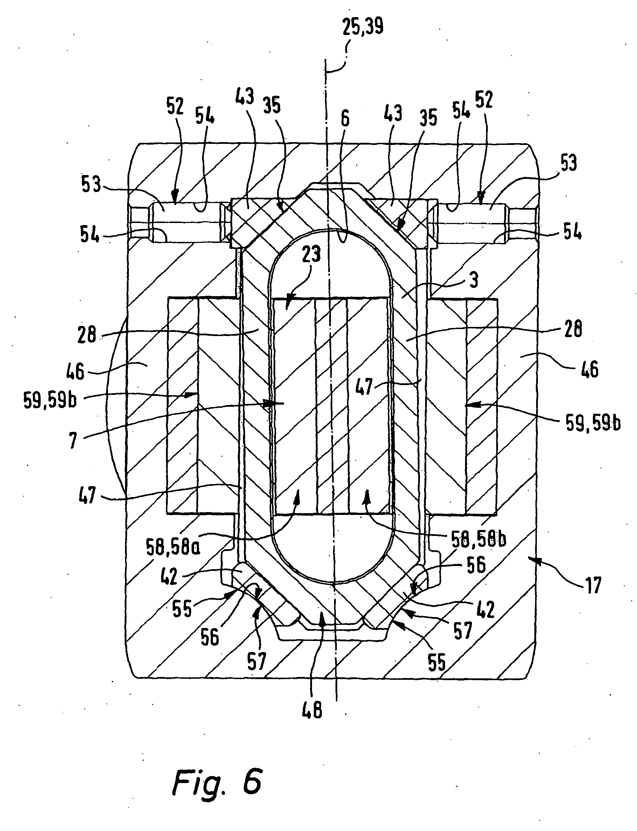

Am Außenumfang des Gehäuserohrs 3 ist ein Abtriebsschlitten 17 angeordnet. Dieser umschließt das Gehäuserohr 3 insbesondere vollständig, wobei er im Querschnitt gesehen rahmenartig strukturiert ist (Figuren 5 und 6). Er hat mithin die Gestalt einer Hülse, wobei der Begriff "Hülse" im weiteren Sinne zu verstehen ist und keine Festlegung auf eine bestimmte Innenkontur oder Außenkontur nach sich zieht. Beim Ausführungsbeispiel ist der Abtriebsschlitten 17 außen im wesentlichen quaderförmig gestaltet, mit vier zueinander rechtwinkeligen Außenflächen 18.

An dem Abtriebsschlitten 17 befindet sich mindestens eine Montageschnittstelle 22 zur Befestigung einer zu bewegenden Komponente, beispielsweise eines Maschinenteils. Die MontageSchnittstelle 22 kann mit Befestigungsmitteln, beispielsweise Gewindebohrungen ausgestattet sein. Beim Ausführungsbeispiel ist mindestens eine der Außenflächen 18 mit einer MontageSchnittstelle 22 ausgestattet.

Über eine permanentmagnetische Kopplungseinrichtung 23 sind der Antriebskolben 7 und der Abtriebsschlitten 17, berührungslos durch die Wandung des Gehäuserohres 3 hindurch, miteinander in Richtung der Antriebsbewegung 16 bewegungsgekoppelt. Diese Richtung sei im folgenden auch als axiale Richtung bezeichnet.

Aufgrund der magnetischen Kopplung bilden der Antriebskolben 7 und der Abtriebsschlitten 17 eine Bewegungseinheit. Die Abtriebsbewegung 16 des Antriebskolbens 7 wird verzögerungsfrei in eine gleichgerichtete synchrone Abtriebsbewegung 24 des Abtriebsschlittens 17 umgesetzt.

Alternativ zu der berührungslosen Bewegungskopplung könnte auch eine mechanische Kopplung vorgesehen sein. Beispielsweise wäre eine mechanische Verbindung mittels Zahnriemen oder mittels eines einen Längsschlitz des Gehäuserohres 3 durchsetzenden Mitnehmers möglich.

Der Abtriebsschlitten 17 kann auch so ausgeführt sein, dass er das Gehäuserohr 3 in dessen Umfangsrichtung nicht komplett umschließt. Er könnte dann das Gehäuserohr 3 beispielsweise klammerartig oder reiterartig entlang eines Teils seines Umfanges umfassen.

Kompakte Abmessungen in Verbindung mit hohen erzielbaren Antriebskräften verspricht eine Bauform des Gehäuserohres 3 mit länglichem Querschnitt. Dies trifft für das Ausführungsbeispiel zu. Auch der Querschnitt des Rohrinnenraumes 6 ist zweckmäßigerweise länglich gestaltet.

Das im Querschnitt längliche Gehäuserohr 3 verfügt über eine Querschnitts-Längsachse 25 und eine hierzu rechtwinkelige Querschnitts-Querachse 26 (siehe Figur 5). Die Querschnitts-Längsachse 25 durchsetzt die beiden einander entgegengesetzten schmalseitigen Wandabschnitte 27, die Querschnitts-Querachse 26 durchsetzt die beiden einander gegenüberliegenden breitseitigen Wandabschnitte 28 des Gehäuserohres 3.

Der Querschnitt des Rohrinnenraumes 6 ist vorzugsweise so gestaltet, dass seine Umrisslinien im Bereich der breitseitigen Wandabschnitte 28 linear verlaufen und im Bereich der schmalseitigen Wandabschnitte 27 kreisbogenförmig abgerundet ist.

Die Außenkontur des Querschnittes des Gehäuserohres 3 ist bevorzugt achteckig. Sie setzt sich zusammen aus zur Querschnitts-Längsachse 25 parallelen, von den beiden breitseitigen Wandabschnitten 28 gebildeten langen Seitenflächen 32, aus zwei hierzu rechtwinkeligen kurzen Seitenflächen 33, die von den schmalseitigen Wandabschnitten 27 gebildet sind, und schließlich aus insgesamt vier Schrägflächen 34, von denen je eine in einem der vier Übergangsbereiche zwischen den langen und kurzen Seitenflächen 32, 33 angeordnet ist.

Die Schrägflächen 34 bilden zur Lagerung des Abtriebsschlittens 17 dienende Führungsflächen 35 und besitzen jeweils einen sowohl bezüglich der Querschnitts-Längsachse 25 als auch bezüglich der Querschnitts-Querachse 26 geneigten Verlauf.

Die erwähnten Führungsflächen 35 sind paarweise funktionell zusammengefasst. Die beiden jeweils der gleichen Schmalseite des Gehäuserohres 3 zugeordneten Führungsflächen 35 bilden ein erstes bzw. zweites Führungsflächenpaar 36, 37, wobei sich diese beiden Führungsflächenpaare 36, 37 in Achsrichtung einer mit der Querschnitts-Längsachse zusammenfallenden zweiten Querachse 39 beabstandet gegenüberliegen. Die zum jeweils gleichen Führungsflächenpaar 36 oder 37 gehörenden Führungsflächen 35 liegen sich jeweils in der Achsrichtung einer mit der Querschnitts-Querachse 26 zusammenfallenden ersten Querachse 38 gegenüber. Die beiden Querachsen 38, 39 sind mithin rechtwinkelig zueinander ausgerichtet.

Die Führungsflächen 35 sind zweckmäßigerweise jeweils eben und verlaufen bevorzugt axial durchgehend über die gesamte Länge des Gehäuserohres 3. Sie weisen vom Rohrinnenraum 6 weg.

Die im Querschnitt gesehene Neigung der Führungsflächen 35 bezüglich der ersten und zweiten Querachse 38, 39 ist bei allen vier Führungsflächen 35 zweckmäßigerweise identisch. Bevorzugt schließt jede Führungsfläche 35 mit jeder Querachse 38, 39 einen Winkel von 45° ein. Hiervon abweichende Neigungswinkel sind jedoch ebenfalls denkbar.

Man kann sich die äußere Querschnittskontur des Gehäuserohres 3 beim Ausführungsbeispiel auch vorstellen als im wesentlichen rechteckigen Querschnitt, der in den vier Eckbereichen zur Bildung der Führungsflächen 35 abgeschrägt ist.

An jeder Führungsfläche 35 des ersten Führungsflächenpaares 36 liegt ein erstes Lagerelement 42 gleitverschieblich an. Je ein zweites Lagerelement 43 steht in gleitfähigem Führungskontakt mit je einer Führungsfläche 35 des zweiten Führungsflächenpaares 37. Die Lagerelemente 42, 43 sind am Antriebsschlitten 17 angeordnet und machen deren Linearbewegung mit. Sie sind zweckmäßigerweise als leistenförmige Gleitelemente ausgeführt, die sich über einen Großteil der Baulänge des Abtriebsschlittens 17 erstrecken und mithin mit einer relativ langen Kontaktfläche an den Führungsflächen 35 anliegen. Alternativ wäre es möglich, pro Führungsfläche 35 mehrere axial aufeinanderfolgende Lagerelemente vorzusehen.

Die ersten Lagerelemente 42 zeichnen sich durch eine bezüglich dem Antriebsschlitten 17 schwenkbar Lagerung aus. Die zu der Längsachse 8 parallelen Schwenkachsen sind bei 44 angedeutet, der Schwenkradius bei 45. Die beiden ersten Lagerelemente 42 können unabhängig voneinander um die ihnen zugeordnete Schwenkachse 44 verschwenkt werden.

Die an den Führungsflächen 35 des zweiten Führungsflächenpaares 37 anliegenden zweiten Lagerelemente 43 sind in Achsrichtung der ersten Querachse 38 relativ zum Abtriebsschlitten 17 verschiebbar. Dadurch kann ihre bezüglich dem Abtriebsschlitten 17 in der Achsrichtung der ersten Querachse 38 eingenommene Querposition variabel vorgegeben werden.

Durch ein aufeinander abgestimmtes Verstellen der beiden zweiten Lagerelemente 43 ist eine winkelmäßige Justierung des Abtriebsschlittens 17 bezüglich des Gehäuserohres 3 möglich. Je nach Verstellrichtung der zweiten Lagerelemente 43 wird der Abtriebsschlitten 17 in seinem zugeordneten Umfangsbereich quer zum Gehäuserohr 3 in die eine oder andere Richtung verschwenkt. Der Schwenkbereich 48 befindet sich dabei im Bereich des gegenüberliegenden ersten Führungsflächenpaares 36. Aufgrund der Schwenkbeweglichkeit der ersten Lagerelemente 42 können sich diese entsprechend der geänderten Winkellage relativ zum Abtriebsschlitten 17 selbsttätig ausrichten, ohne den flächigen Führungskontakt zu den ihnen zugeordneten Führungsflächen 35 zu verlieren.

Zum Vergleich zeigen die Figuren 5 und 6 unterschiedliche eingestellte Winkelausrichtungen zwischen dem Antriebsschlitten 17 und dem Gehäuserohr 3. Während bei der Einstellung der Figur 5 zwischen den beiden breitseitigen Wandabschnitten 28 des Gehäuserohres 3 und den diesen benachbarten Stegabschnitten 46 des Abtriebsschlittens 17 jeweils ein Luftspalt 47 mit konstanter Breite vorliegt, besitzen die Luftspalte 47 bei der Einstellung der Figur 6 eine durch das um den zur Längsachse 8 parallelen Schwenkbereich 48 erfolgte Verschwenken des Antriebsschlittens 17 hervorgerufene keilförmige Querschnittsform.

Bevorzugt sind die zweiten Lagerelemente 43 unabhängig voneinander verstellbar. Bei der Einstellung wird man in der Regel so vorgehen, dass man die beiden Lagerelemente 43 jeweils gleichzeitig in die gleiche Richtung verschiebt. Der Antriebsschlitten 17 verdreht sich dabei entgegengesetzt zu derjenigen Richtung, in der die zweiten Lagerelemente 43 bewegt werden.

Zum Justieren sind jedem zweiten Lagerelement 43 Beaufschlagungsmittel 52 zugeordnet, die sich am Abtriebsschlitten 17 abstützen und die in der Lage sind, in Richtung zur zugeordneten Führungsfläche 35 drückend auf das zwischen ihnen und der betreffenden Führungsfläche 35 platzierte zweite Lagerelement 43 einzuwirken.

Bevorzugt enthalten die Beaufschlagungsmittel 52 mehrere längs eines jeweiligen zweiten Lagerelementes 43 verteilte Beaufschlagungsschrauben 53, die in Achsrichtung der ersten Querachse 38 verschraubbar in Gewindebohrungen 54 des Antriebsschlittens 17 aufgenommen sind. Bevorzugt handelt es sich um in den Antriebsschlitten 17 versenkte Madenschrauben. Mittels eines ansetzbaren Schraubwerkzeuges können sie wahlweise eingeschraubt oder herausgeschraubt werden, wobei sie entweder drückend auf das vorgelagerte zweite Lagerelement 43 einwirken oder von diesem zurückgezogen werden. Aufgrund einer ausreichend schwergängig ausgeführten Gewindeverbindung ist gewährleistet, dass die Beaufschlagungsschrauben 53 in der eingestellten Schraubposition blockiert bleiben, so dass ein unerwünschtes Verstellen der zweiten Lagerelemente 43 vermieden wird.

Anstelle des beim Ausführungsbeispiel nur losen Kontaktes, können die Beaufschlagungsmittel 52 auch so mit den zweiten Lagermitteln 43 verbunden sein, dass sie sowohl drückend als auch ziehend darauf einwirken können.

Die Schwenkachse 44 ist beim Ausführungsbeispiel nur eine gedachte Achse, um die das zugeordnete erste Lagerelement 42 verschwenkbar ist. Definiert wird sie vorzugsweise durch eine Kreisbogenführungseinrichtung 55, die bei einfacher Herstellung eine hohe Belastbarkeit aufweist.

Zu der Kreisbogenführungseinrichtung 55 gehören zwei zueinander komplementäre kreisbogenförmige Schwenklagerflächen, deren Krümmungszentrum auf der gewünschten Schwenkachse 44 liegt. Eine Schwenklagerfläche 56 befindet sich am Abtriebsschlitten 17, die andere am zugeordneten ersten Lagerelement 42. Exemplarisch ist die Schwenklagerfläche 56 des Abtriebsschlittens 17 eine konvexe Fläche, während die Schwenklagerfläche 57 des ersten Lagerelementes 42 eine konkave Fläche ist. Eine umgekehrte Ausgestaltung ist jedoch ebenfalls möglich.

Im Bereich der beiden Paarungen von Schwenklagerflächen 56, 57 können die beiden ersten Lagerelemente 42 jeweils unter Ausführung der Schwenkbewegung am Abtriebsschlitten 17 abgleiten, oder umgekehrt.

Was die Lagerelemente 42, 43 anbelangt, so können diese anstelle als Gleitelemente auch in Gestalt von Wälzelementen ausgeführt sein.

Die permanentmagnetische Kopplungseinrichtung 23 enthält eine am Antriebskolben 7 angeordnete innere Magneteinrichtung 58 sowie eine am Abtriebsschlitten 17 angeordnete äußere Magneteinrichtung 59. Diese sind bevorzugt so ausgebildet, dass die erzeugten magnetischen Kopplungskräfte überwiegend in der Achsrichtung der ersten Querachse 38 wirksam sind.

Um dies zu realisieren enthält die äußere Magneteinrichtung 59 beim Ausführungsbeispiel zwei in der Richtung der ersten Querachse 38 auf einander diametral entgegengesetzten Umfangsseiten des Gehäuserohres 3 platzierte äußere Magneteinheiten 59a, 59b. Jeder dieser äußeren Magneteinheiten 59a, 59b liegt eine von zwei inneren Magneteinheiten 58a, 58b der inneren Magneteinrichtung 58 radial gegenüber. Die einander jeweils benachbarten äußeren und inneren Magneteinheiten 59a, 58a; 59b, 58b kooperieren jeweils magnetisch anziehend.

Insbesondere bei dieser Konstellation kann nicht ausgeschlossen werden, dass die zwischen den miteinander kooperierenden Magneteinheiten 59a, 58a; 59b, 58b wirksamen magnetischen Anziehungskräfte unterschiedlich stark sind. Dies kann darauf beruhen, dass die Magneteinheiten aufgrund von Fertigungstoleranzen über unterschiedliche Abmessungen oder unterschiedliche Magnetisierungsintensitäten verfügen. Die Folge hiervon kann ein verstärktes Anpressen einzelner Lagerelemente 42, 34 gegen die zugeordneten Führungsflächen 35 sein, mit der Folge eines erhöhten Verschleißes. Durch die drehwinkelmäßige Justiermöglichkeit zwischen Abtriebsschlitten 17 und Gehäuserohr 3 besteht jedoch die Möglichkeit, die Spaltbreite der Luftspalte 47 so zu variieren, dass sich vor allem die in Richtung der ersten Querachse 38 wirkenden magnetischen Anziehungskräfte kompensieren und alle vier Lagerelemente 42, 43 mit im wesentlicher gleicher Kraft an die zugeordneten Führungsflächen 35 angedrückt werden. Dies schafft eine leichtgängige Verfahrmöglichkeit für den Antriebsschlitten 17 bei reduzierter Verschleißanfälligkeit.

Die einzelnen Magneteinheiten 59a, 59b, 58a, 58b umfassen beim Ausführungsbeispiel jeweils mehrere in Richtung der Längsachse 8 aufeinanderfolgend angeordnete permanentmagnetische und bevorzugt plattenförmige Magnetelemente 62, die einander zweckmäßigerweise paarweise zugeordnet sind. Die Magnetelemente 62 jeder Magneteinheit 59a, 59b, 58a, 58b sind zweckmäßigerweise an einem sich ebenfalls in Richtung der Längsachse 8 erstreckenden und bevorzugt plattenförmigen, ferromagnetischen Rückschlussteil 63 angeordnet. Die Magnetelemente 62 können angeklebt sein.

Der beim Ausführungsbeispiel realisierte bevorzugte Aufbau des Antriebskolbens 7 sieht zwei axial beabstandete, mit je mindestens einem Dichtungsring 64 ausgestattete Kolbenköpfe 65 vor, die an den beiden Endabschnitten eines zentralen Rückschlussteils 63, 63a angebracht sind, das als Träger für die Magnetelemente 62 beider innerer Magneteinheiten 58a, 58b fungiert. Diese bevorzugte Bauweise eines Antriebskolbens 7 ist im übrigen auch dann vorteilhaft, wenn die vorstehend erläuterten Mittel zur winkelmäßigen Justierung zwischen Abtriebsschlitten 17 und Gehäuserohr 3 nicht vorhanden sind und insofern ein konventioneller Aufbau der Linearantriebsvorrichtung vorliegt.

## Patentansprüche

1. Fluidbetätigte Linearantriebsvorrichtung, mit einem Gehäuserohr (3), in dem ein Antriebskolben (7) linear verschiebbar aufgenommen ist, der mit einem am Außenumfang des Gehäuserohres (3) in dessen Längsrichtung verschiebbar gelagerten Abtriebsschlitten (17) bewegungsgekoppelt ist, wobei am Außenumfang des Gehäuserohres (3) zur Lagerung des Abtriebsschlittens (17) zwei jeweils zwei sich längs des Gehäuserohres (3) erstreckende und sich in Achsrichtung einer ersten Querachse (38) des Gehäuserohres (3) gegenüberliegende Führungsflächen (35) aufweisende Führungsflächenpaare (36, 37) angeordnet sind, die in Achsrichtung einer zu der ersten Querachse (38) rechtwinkeligen zweiten Querachse (39) des Gehäuserohres (3) zueinander beabstandet sind, **dadurch gekennzeichnet, dass** die Führungsflächen (35), im Querschnitt des Gehäuserohres (3) gesehen, jeweils bezüglich der ersten und der zweiten Querachse (38, 39) geneigt sind, dass an den Führungsflächen (35) des einen, ersten Führungsflächenpaares (36) am Abtriebsschlitten (17) angeordnete erste Lagerelemente (42) anliegen, die bezüglich einer in Längsrichtung des Gehäuserohres (3) verlaufenden Schwenkachse (44) unabhängig voneinander relativ zum Abtriebsschlitten (17) verschwenkbar sind, und dass an den Führungsflächen (35) des anderen, zweiten Führungsflächenpaares (37) am Abtriebsschlitten (17) angeordnete zweite Lagerelemente (43) anliegen, deren in Achsrichtung der ersten Querachse (38) relativ zum Abtriebsschlitten (17) eingenommene Querposition variabel vorgebbar ist.

2. Linearantriebsvorrichtung nach Anspruch 1, **dadurch gekennzeichnet, dass** die Führungsflächen (35), im Querschnitt des Gehäuserohres (3) gesehen, untereinander mit gleichen Neigungswinkeln bezüglich den beiden Querachsen (38, 39) ausgerichtet sind.

3. Linearantriebsvorrichtung nach Anspruch 1 oder 2, **dadurch gekennzeichnet, dass** die Führungsflächen (35) ebene Flächen sind.

4. Linearantriebsvorrichtung nach einem der Ansprüche 1 bis 3, **dadurch gekennzeichnet, dass** der Abtriebsschlitten (17) das Gehäuserohr (3) vollständig umschließt.

5. Linearantriebsvorrichtung nach einem der Ansprüche 1 bis 4, **dadurch gekennzeichnet, dass** der Antriebskolben (7) und der Abtriebsschlitten (17) durch eine durch die Wandung des Gehäuserohres (3) hindurch wirksame permanentmagnetische Kopplungseinrichtung (23) berührungslos miteinander bewegungsgekoppelt sind.

6. Linearantriebsvorrichtung nach Anspruch 5, **dadurch gekennzeichnet, dass** die permanentmagnetische Kopplungseinrichtung (23) eine am Antriebskolben (7) angeordnete innere Magneteinrichtung (58) und eine mit dieser zusammenarbeitende, am Abtriebsschlitten (17) angeordnete äußere Magneteinrichtung (59) aufweist, wobei zweckmäßigerweise die äußere Magneteinrichtung (59) aus zwei auf einander diametral entgegengesetzten Umfangsseiten des Gehäuserohres (3) platzierten äußeren Magneteinheiten (59a, 59b) besteht und wobei zweckmäßigerweise die innere Magneteinrichtung (58) zwei sich diametral gegenüberliegende und jeweils einer der äußeren Magneteinheiten (59a, 59b) radial benachbarte innere Magneteinheiten (58a, 58b) enthält.

7. Linearantriebsvorrichtung nach Anspruche 5 oder 6, **dadurch gekennzeichnet, dass** die permanentmagnetische Kopplungseinrichtung (23) so ausgebildet ist, dass die von ihr erzeugten magnetischen Kopplungskräfte im wesentlichen nur in der Achsrichtung der ersten Querachse (38) wirksam sind.

8. Linearantriebsvorrichtung nach einem der Ansprüche 1 bis 7, **dadurch gekennzeichnet, dass** das Gehäuserohr (3) einen länglichen Querschnitt aufweist.

9. Linearantriebsvorrichtung nach Anspruch 8 in Verbindung mit einem der Ansprüche 5 bis 7, **dadurch gekennzeichnet, dass** die permanentmagnetische Kopplungseinrichtung (23) so ausgebildet ist, dass die von ihr erzeugten magnetischen Kopplungskräfte rechtwinkelig zur Querschnitts-Längsachse (26) des Gehäuserohres (3) wirksam sind.

10. Linearantriebsvorrichtung nach Anspruch 8 oder 9, **dadurch gekennzeichnet, dass** die Führungsflächen (35) in den vier Übergangsbereichen zwischen den beiden Schmalseiten und den beiden Breitseiten des im Querschnitt länglichen Gehäuserohres (3) angeordnet sind.

11. Linearantriebsvorrichtung nach einem der Ansprüche 8 bis 10, **dadurch gekennzeichnet, dass** das Gehäuserohr (3) einen Querschnitt mit im wesentlichen rechteckiger, in den vier Eckbereichen zur Bildung der Führungsflächen (35) abgeschrägter Außenkontur aufweist.

12. Linearantriebsvorrichtung nach einem der Ansprüche 8 bis 11, **dadurch gekennzeichnet, dass** das Gehäuserohr (3) einen Querschnitt mit achteckiger Außenkontur aufweist, mit langen Seitenflächen (32) an den Breitseiten und kurzen Seitenflächen (33) an den Schmalseiten, und mit in den Übergangsbereichen zwischen den Schmalseiten und den Breitseiten befindlichen, bezüglich den langen und kurzen Seitenflächen (32, 33) schräg verlaufenden Führungsflächen (35).

13. Linearantriebsvorrichtung nach einem der Ansprüche 8 bis 12, **dadurch gekennzeichnet, dass** die beiden Führungsflächenpaare (36, 37) jeweils einer der beiden Schmalseiten des Gehäuserohres (3) zugeordnet sind.

14. Linearantriebsvorrichtung nach einem der Anspruche 8 bis 13, **dadurch gekennzeichnet, dass** die zweite Querachse (39) mit der Querschnitts-Längsachse (25) und die erste Querachse (38) mit der Querschnitts-Querachse (26) des länglichen Querschnittes des Gehäuserohres (3) zusammenfällt.

15. Linearantriebsvorrichtung nach einem der Ansprüche 1 bis 14, **dadurch gekennzeichnet, dass** die Lagerelemente (42, 43) als Gleitelemente ausgeführt sind, wobei sie zweckmäßigerweise leistenförmig ausgebildet sind und sich parallel zur Längsachse (8) des Gehäuserohres (3) erstrecken.

16. Linearantriebsvorrichtung nach einem der Ansprüche 1 bis 15, **dadurch gekennzeichnet, dass** die verschwenkbaren ersten Lagerelemente (42) jeweils über eine Kreisbogenführungseinrichtung (55) verschwenkbar am Abtriebsschlitten (17) gelagert sind, wobei zweckmäßigerweise die Kreisbogenführungseinrichtung (55) wenigstens zwei zueinander komplementäre, kreisbogenförmige Schwenklagerflächen (56, 57) aufweist, deren eine am Abtriebsschlitten (17) und deren andere am zugeordneten ersten Lagerelement angeordnet ist und die in der Schwenkrichtung verschieblich aneinander anliegen, und wobei zweckmäßigerweise die am Abtriebsschlitten (17) angeordnete Schwenklagerfläche (56) eine konvexe Fläche und die gleitverschieblich daran anliegende Schwenklagerfläche (57) des ersten Lagerelementes (42) eine komplementäre konkave Fläche ist, oder umgekehrt.

17. Linearantriebsvorrichtung nach einem der Ansprüche 1 bis 16, **dadurch gekennzeichnet, dass** die mit den beiden Führungsflächen (35) des zweiten Führungsflächenpaares (37) zusammenwirkenden zweiten Lagerelemente (43) unabhängig voneinander in Achsrichtung der ersten Querachse (38) relativ zum Abtriebsschlitten (17) justierbar sind.

18. Linearantriebsvorrichtung nach einem der Ansprüche 1 bis 17, **dadurch gekennzeichnet, dass** die zweiten Lagerelemente (43) in Achsrichtung der ersten Querachse (38) gleitverschieblich am Abtriebsschlitten (17) gelagert sind und mit sich am Abtriebsschlitten (17) einstellbar abstützenden Beaufschlagungsmitteln (52) kooperieren.

19. Linearantriebsvorrichtung nach einem der Ansprüche 5 bis 18, **dadurch gekennzeichnet, dass** der Antriebskolben (7) zwei axial beabstandete Kolbenköpfe (65) aufweist, zwischen denen sich ein plattenförmiges ferromagnetisches Rückschlussteil (63a) erstreckt, das permanentmagnetische Magnetelemente (62) der permanentmagnetischen Kopplungseinrichtung (23) trägt.

## Claims

1. Fluid-actuated linear drive unit with a casing tube (3) in which is accommodated a driving piston (7) with linear sliding capability and which is movement-coupled to an output slide (17) mounted slidably on the outer periphery of the casing tube (3) in its axial direction, wherein there are located on the outer periphery of the casing tube (3) to support the output slide (17) two guide surface pairs (36, 37), each having two guide surfaces (35) extending along the casing tube (3) and lying opposite in the axial direction of a first transverse axis (38) of the casing tube (3), spaced apart in the axial direction of a second transverse axis (39) of the casing tube (3) at right-angles to the first transverse axis (38), **characterised in that** the guide surfaces (35), viewed in the cross-section of the casing tube (3), are each inclined relative to the first and second transverse axis (38, 39), that first bearing elements (42) located on the output slide (17) are in contact with the guide surfaces (35) of the one first guide surface pair (36) and are pivotable relative to the output slide (17), independently of one another, with reference to a pivot axis (44) running in the axial direction of the casing tube (3), and that on the guide surfaces (35) of the other second guide surface pair (37) contact is made by second bearing elements (43) located on the output slide (17) and having an adopted transverse position, in the axial direction of the first transverse axis (38) relative to the output slide (17), which is variably presettable.

2. Linear drive unit according to claim 1, **characterised in that** the guide surfaces (35), viewed in the cross-section of the casing tube (3), are aligned one below the other with different angles of inclination relative to the two transverse axes (38, 39).

3. Linear drive unit according to claim 1 or 2, **characterised in that** the guide surfaces (35) are flat surfaces.

4. Linear drive unit according to any of claims 1 to 3, **characterised in that** the output slide (17) surrounds the casing tube (3) completely.

5. Linear drive unit according to any of claims 1 to 4, **characterised in that** the driving piston (7) and the output slide (17) are movement-coupled to one another without contact by a permanent-magnetic coupling device (23) which is effective through the wall of the casing tube (3).

6. Linear drive unit according to claim 5, **characterised in that** the permanent-magnetic coupling device (23) has an inner magnet unit (58) provided on the driving piston (7), and an outer magnet device (59) provided on the output slide (17) and working in conjunction with the former, wherein expediently the outer magnet device (59) comprises two outer magnet units (59a, 59b), and wherein expediently the inner magnet device (58) contains two diametrically opposite inner magnet units (58a, 58b), each radially adjacent to one of the outer magnet units (59a, 59b).

7. Linear drive unit according to claims 5 or 6, **characterised in that** the permanent-magnetic coupling device (23) is so designed that they magnetic coupling forces generated by it are effective substantially only in the axial direction of the first transverse axis (38).

8. Linear drive unit according to any of claims 1 to 7, **characterised in that** the casing tube (3) has an oblong cross-section.

9. Linear drive unit according to claim 8 in conjunction with any of claims 5 to 7, **characterised in that** the permanent-magnetic coupling device (23) is so designed that the magnetic coupling forces generated by it are effective at right-angles to the cross-section transverse axis (26) of the casing tube (3).

10. Linear drive unit according to claim 8 or 9, **characterised in that** the guide surfaces (35) are located in the four transition zones between the two narrow sides and the two broad sides of the casing tube (3) with its oblong cross-section.

11. Linear drive unit according to any of claims 8 to 10, **characterised in that** the casing tube (3) has a cross-section with a substantially rectangular external contour, chamfered in the four corner areas to form the guide surfaces (35).

12. Linear drive unit according to any of claims 8 to 11, **characterised in that** the casing tube (3) has a cross-section with an octagonal external contour with long side faces (32) on the broad sides and short side faces (33) on the narrow sides, and with guide surfaces (35) located in the transition zones between the narrow sides and the broad sides, and running at an angle relative to the long and short side faces (32, 33).

13. Linear drive unit according to any of claims 8 to 12, **characterised in that** each of the two guide surface pairs (36, 37) is assigned to one of the two narrow sides of the casing tube (3).

14. Linear drive unit according to any of claims 8 to 13, **characterised in that** the second transverse axis (39) coincides with the cross-section longitudinal axis (25), and the first transverse axis (38) coincides with the cross-section transverse axis (26) of the oblong cross-section of the casing tube (3).

15. Linear drive unit according to any of claims 1 to 14, **characterised in that** the bearing elements (42, 43) are in the form of sliding elements, wherein they are expediently strip-like in form and extend parallel to the longitudinal axis (8) of the casing tube (3).

16. Linear drive unit according to any of claims 1 to 15, **characterised in that** the pivotable first bearing elements (42) are each mounted pivotably on the output slide (17) via a circular guidance device (55), wherein expediently the circular guidance device (55) has at least two complementary circular pivot bearing faces (56, 57), one located on the output slide (17) and the other on the assigned first bearing element, and which are in sliding contact with one another in the direction of pivoting, and wherein expediently the pivot bearing face (56) located on the output slide (17) has a convex surface, and the pivot bearing face (57) of the first bearing element (42) which is in sliding contact with it has a complementary concave surface, or vice-versa.

17. Linear drive unit according to any of claims 1 to 16, **characterised in that** the second bearing elements (43) working in conjunction with the two guide surfaces (35) of the second guide surface pair (37) may be adjusted relative to the output slide (17), in the direction of the first transverse axis (38), independently of one another.

18. Linear drive unit according to any of claims 1 to 17, **characterised in that** the second bearing elements (43) are mounted on the output slide (17) with the ability to slide in the axial direction of the first transverse axis (38), and cooperate with supporting pressure-loading means (52) which are adjustable on the output slide (17).

19. Linear drive unit according to any of claims 5 to 18, **characterised in that** the driving piston (7) has two piston heads (65) spaced axially apart, between which extends a plate-shaped ferromagnetic return path element (63a), which carries the permanent-magnetic magnet elements (62) of the permanent-magnetic coupling device (23).

## Revendications

1. Dispositif d'entraînement linéaire actionné par un fluide, comportant un tube formant carter (3), dans lequel un piston d'entraînement (7) est logé de manière mobile linéairement, lequel est couplé en mouvement avec un chariot mené (17), monté sur la périphérie extérieure du tube formant carter (3) de manière mobile dans le sens longitudinal de celui-ci, sachant que pour le montage du chariot mené (17), deux paires de faces de guidage (36, 37) sont disposées sur la périphérie extérieure du tube formant carter (3), lesquelles s'étendent le long du tube formant carter (3) et comportent des faces de guidage (35) qui sont situées face à face dans la direction axiale d'un premier axe transversal (38) du tube formant carter (3), et lesquelles sont situées à distance l'une de l'autre dans la direction axiale d'une deuxième axe transversal (39) perpendiculaire au premier axe transversal (38), **caractérisé en ce que** les faces de guidage (35), par référence à une coupe transversale du tube formant carter (3), sont inclinées chacune par rapport au premier et au deuxième axe transversal (38, 39), **en ce que** sur les faces de guidage (35) de l'une des paires, à savoir la première paire de faces de guidage (36) prennent appui des premiers éléments de palier (42), disposés sur le chariot mené (17) et aptes à pivoter par rapport au chariot mené (17), indépendamment les uns des autres, par rapport à un axe de pivotement (44) orienté dans la direction longitudinale du tube formant carter (3), et **en ce que** sur les faces de guidage (35) de l'autre paire, à savoir la deuxième paire de faces de guidage (37) prennent appui des deuxièmes éléments de palier (43), disposés sur le chariot mené (17) et dont la position transversale par rapport au chariot mené (17), prise dans la direction axiale du premier axe transversal (38), peut être prédéfinie de manière variable.

2. Dispositif d'entraînement linéaire selon la revendication 1, **caractérisé en ce que** les faces de guidage (35), par référence à une coupe transversale du tube formant carter (3), sont alignées avec les mêmes angles d'inclinaison par rapport aux deux axes transversaux (38, 39).

3. Dispositif d'entraînement linéaire selon la revendication 1 ou 2, **caractérisé en ce que** les faces de guidage (35) sont des surfaces planes.

4. Dispositif d'entraînement linéaire selon l'une quelconque des revendications 1 à 3, **caractérisé en ce que** le chariot mené (17) entoure complètement le tube formant carter (3).

5. Dispositif d'entraînement linéaire selon l'une quelconque des revendications 1 à 4, **caractérisé en ce que** le piston d'entraînement (7) et le chariot mené (17) sont couplés en mouvement l'un avec l'autre sans contact par un dispositif de couplage (23) à aimant permanent, actif à travers la paroi du tube formant carter (3).

6. Dispositif d'entraînement linéaire selon la revendication 5, **caractérisé en ce que** le dispositif de couplage (23) à aimant permanent comporte un dispositif à aimant (58) intérieur, disposé sur le piston d'entraînement (7), et un dispositif à aimant (59) extérieur, coopérant avec ledit dispositif à aimant (58) intérieur et disposé sur le chariot mené (17), le dispositif à aimant (59) extérieur étant formé, de manière judicieuse, de deux unités d'aimant (59a, 59b) extérieures positionnées sur des faces périphériques diamétralement opposées du tube formant carter (3), et le dispositif à aimant (58) intérieur étant formé judicieusement de deux unités d'aimant (58a, 58b) intérieures diamétralement opposées et situées à distance radiale respectivement de l'une des unités d'aimant (59a, 59b) extérieures.

7. Dispositif d'entraînement linéaire selon la revendication 5 ou 6, **caractérisé en ce que** le dispositif de couplage (23) à aimant permanent est réalisé de telle sorte que les forces de couplage magnétiques qu'il génère sont actives sensiblement seulement dans la direction axiale du premier axe transversal (38).

8. Dispositif d'entraînement linéaire selon l'une quelconque des revendications 1 à 7, **caractérisé en ce que** le tube formant carter (3) possède une section allongée.

9. Dispositif d'entraînement linéaire selon la revendication 8 en association avec l'une des revendications 5 à 7, **caractérisé en ce que** le dispositif de couplage (23) à aimant permanent est réalisé de telle sorte que les forces de couplage magnétiques qu'il génère sont actives perpendiculairement à l'axe longitudinal (26) de la section du tube formant carter (3).

10. Dispositif d'entraînement linéaire selon la revendication 8 ou 9, **caractérisé en ce que** les faces de guidage (35) sont disposées dans les quatre zones de transition entre les deux côtés étroits et les deux côtés larges du tube formant carter (3) à section allongée.

11. Dispositif d'entraînement linéaire selon l'une quelconque des revendications 8 à 10, **caractérisé en ce que** le tube formant carter (3) possède une section avec un contour extérieur sensiblement rectangulaire, biseauté dans les quatre zones d'angle pour former les faces de guidage (35).

12. Dispositif d'entraînement linéaire selon l'une quelconque des revendications 8 à 11, **caractérisé en ce que** le tube formant carter (3) possède une section avec un contour extérieur octogonal, avec des faces latérales (32) longues sur les côtés larges et des faces latérales (33) courtes sur les côtés étroits, et avec des faces de guidage (35), situées entre les côtés étroits et les côtés larges et orientés en oblique par rapport aux faces latérales longues et courtes (32, 33).

13. Dispositif d'entraînement linéaire selon l'une quelconque des revendications 8 à 12, **caractérisé en ce que** les deux paires de faces de guidage (36, 37) sont associées respectivement à l'un des deux côtés étroits du tube formant carter (3).

14. Dispositif d'entraînement linéaire selon l'une quelconque des revendications 8 à 13, **caractérisé en ce que** le deuxième axe transversal (39) coïncide avec l'axe longitudinal (25) de la section allongée du tube formant carter (3) et le premier axe transversal (38) coïncide avec l'axe transversal (26) de celle-ci.

15. Dispositif d'entraînement linéaire selon l'une quelconque des revendications 1 à 14, **caractérisé en ce que** les éléments de palier (42, 43) sont réalisés sous la forme d'éléments de glissement, sachant que, de manière judicieuse, ils sont réalisés en forme de latte et s'étendent parallèlement à l'axe longitudinal (8) du tube formant carter (3).

16. Dispositif d'entraînement linéaire selon l'une quelconque des revendications 1 à 15, **caractérisé en ce que** les premiers éléments de palier (42) pivotants sont montés chacun de manière pivotante sur le chariot mené (17) par l'intermédiaire d'un dispositif de guidage en arc de cercle (55), ledit dispositif de guidage en arc de cercle (55) comportant, de manière judicieuse, au moins deux surfaces de palier pivotant (56, 57) complémentaires en forme d'arc de cercle, dont l'une est disposée sur le chariot mené (17) et dont l'autre est disposée sur le premier élément de palier associé, et qui sont en appui l'une contre l'autre de manière mobile dans la direction de pivotement, et, de manière judicieuse, la surface de palier pivotant (56), disposée sur le chariot mené (17), étant une surface convexe et la surface de palier pivotant (57) du premier élément de palier (42), en appui par glissement contre ladite surface convexe, étant une surface concave complémentaire, ou inversement.

17. Dispositif d'entraînement linéaire selon l'une quelconque des revendications 1 à 16, **caractérisé en ce que** les deuxièmes éléments de palier (43), coopérant avec les deux faces de guidage (35) de la deuxième paire de faces de guidage (37), peuvent être ajustées par rapport au chariot mené (17), indépendamment l'une de l'autre dans la direction axiale du premier axe transversal (38).

18. Dispositif d'entraînement linéaire selon l'une quelconque des revendications 1 à 17, **caractérisé en ce que** les deuxièmes éléments de palier (43) sont logés sur le chariot mené (17) de manière à pouvoir glisser dans la direction axiale du premier axe transversal (38) et coopèrent avec des moyens de sollicitation (52) prenant appui de manière réglable contre le chariot mené (17).

19. Dispositif d'entraînement linéaire selon l'une quelconque des revendications 5 à 18, **caractérisé en ce que** le piston d'entraînement (7) comporte deux têtes de piston (65) situées à distance axiale l'une de l'autre, entre lesquelles s'étend un élément de dérivation (63a) ferromagnétique en forme de plaque, qui porte les aimants permanents (62) du dispositif de couplage (23) à aimant permanent.
